(19) Europäisches Patentamt
European Patent Office
Office européen des brevets

(11) **EP 3 068 722 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(21) Anmeldenummer: **15700390.6**

(22) Anmeldetag: **15.01.2015**

(51) Int Cl.:
**B66B 13/14** *(2006.01)*

(86) Internationale Anmeldenummer:
**PCT/EP2015/050649**

(87) Internationale Veröffentlichungsnummer:
**WO 2015/110341 (30.07.2015 Gazette 2015/30)**

(54) **ERMITTLUNG DER BEWEGTEN MASSE EINES TÜRSYSTEMS**

DETERMINATION OF THE MOVED MASS OF A DOOR SYSTEM

DÉTERMINATION DE LA MASSE EN MOUVEMENT D'UN SYSTÈME DE PORTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2014 DE 102014201399**

(43) Veröffentlichungstag der Anmeldung:
**21.09.2016 Patentblatt 2016/38**

(73) Patentinhaber: **Siemens Aktiengesellschaft 80333 München (DE)**

(72) Erfinder:
• **NOLTE, Uwe 30890 Barsinghausen (DE)**
• **BRAATZ, Uwe 30455 Hannover (DE)**

(56) Entgegenhaltungen:
**WO-A1-2007/028850    WO-A2-2005/073119**

**Beschreibung**

Die vorliegende Erfindung betrifft ein Verfahren zur Ermittlung einer bewegten Masse m eines Aufzugtürsystems, das von einem Motor angetrieben wird.

Die Kenntnis der bewegten Masse kann bei Antriebsaufgaben zum Beispiel aus folgenden Gründen interessant sein:

a) Aus Sicherheitsaspekten: Zum Beispiel darf die gesamte kinetische Energie der Tür gemäß der Norm EN81 beim Schließen entweder 4J oder 10J nicht überschreiten,

b) aus antriebstechnischen Gründen: Wenn zum Beispiel die Kraftübertragung bestimmte Werte nicht überschreiten darf, kann die Beschleunigung an die bewegte Masse angepasst werden,

c) zur Fehlererkennung: Wenn sich wesentliche Änderungen der Masse ergeben, kann dies auf fehlerhafte Betriebszustände hinweisen und

d) aus regelungstechnischen Gründen: Die Reglerparameter können an die Masse angepasst werden, um optimales Fahrverhalten zu erzielen.

Zur Ermittlung der bewegten Masse sind zum Beispiel folgende Methoden bekannt:

a) Anlegen einer definierten Kraft und Messung der resultierenden Beschleunigung,

b) Anlegen einer definierten Beschleunigung und Messung der dafür notwendigen Kraft,

c) Anlegen einer definierten Kraft für eine definierte Zeit und Messung der resultierenden Geschwindigkeit,

d) Anlegen einer definierten Spannungsrampe und Messung des Stroms.

Diese Verfahren benötigen eine Kompensation der Reibung und in der Regel eine definierte Fahrkurve, um Fehlereinflüsse zu minimieren.

Das letztgenannte Verfahren ist in der EP 1 529 251 B1 offenbart. Bei diesem Verfahren wird das Türsystem mittels einer elektrischen Antriebsvorrichtung bewegt. Da hierbei eine vorgeschriebene Maximalgeschwindigkeit nicht überschritten werden darf, wird zur Konfiguration der Türsteuereinheit die Masse des Türsystems automatisch ermittelt. Hierzu wird das Türsystem während einer kontrollierten Öffnungsfahrt und ggf. während einer anschließenden Schließfahrt geregelt beschleunigt und anschließend wieder angehalten. Die effektive Motorspannung der Antriebsvorrichtung zur Massebestimmung ergibt sich über die Spannungszeitflächen der Puls-Weiten-Modulation. Dabei treten allerdings Schwierigkeiten auf, da die Spannung im Zwischenkreis schwanken kann und jede Endstufe eine so genannte Totzeit hat, also Zeiten, in denen keiner der beiden Transistoren eingeschaltet ist. Außerdem treten in der Motorleitung noch rein elektrische Verluste aufgrund des Leitungs- und Innenwiderstands auf. All diese Effekte beeinträchtigen die Bestimmung der Leistung erheblich und erschweren eine weitgehend automatisierte und von der Fahrkurve unabhängige Massebestimmung.

Weiterhin ist ein Verfahren und eine Vorrichtung zur Bestimmung der dynamischen Masse bekannt(EP0548505B1). WO 2007/028850 A1, offenbart ein Verfahren zur Ermittlung einer bewegten Masse eines Aufzugtürsystem. Hierbei muss allerdings zu Messzwecken die Tür momentfrei geschaltet werden. Die bei diesem Verfahren zu Messzwecken erforderlichen Öffnungs- und Schließfahrten unterscheiden sich von Öffnungs- und Schließfahrten bei bestimmungsgemäßer Anwendung, die hier als bestimmungsgemäße Öffnungs- und Schließfahrten bezeichnet werden.

Der Erfindung liegt die Aufgabe zugrunde, ein Verfahren zur Ermittlung einer bewegten Masse m eines Aufzugtürsystems vorzuschlagen, das auf einfache Weise die Ermittlung der bewegten Masse m ermöglicht.

Die Aufgabe wird mit den Merkmalen nach Anspruch 1 gelöst. Dabei werden folgende Schritte verwendet:

a) Messung der elektrischen Leistung $P_{el}$ des Motors, die in mechanische Leistung umgewandelt wird,

b) die elektrische Leistung $P_{el}$ wird bei einer bestimmungsgemäßen Öffnungs- und/oder Schließfahrt des Türsystems von Beginn des Antriebs der Masse m durch den Motor aus einer Ausgangsruhelage bis Erreichen einer Endruhelage nach Beendigung des Antriebs wird zur Ermittlung von Energieverlusten, z.B. durch Reib- und/oder Schließkräfte, aufsummiert,

c) Messung der maximalen Geschwindigkeit v der Masse des Türsystems während der bestimmungsgemäßen Öffnungs- und/oder Schließfahrt des Türsystems,

d) die von der Ausgangsruhelage der Masse m des Türsystems bis zum Zeitpunkt des Erreichens ihrer maximalen Geschwindigkeit v vom Motor bereitgestellte elektrische Leistung wird aufsummiert und der so erhaltene Energiewert wird um die bis zu diesem Zeitpunkt aufgetretenen Energieverluste reduziert, um aus der so erhaltenen kinetischen Energie E die Masse m des Türsystems gemäß der folgenden Gleichung zu ermitteln:

$$m = \frac{2E}{v^2}.$$

Das erfindungsgemäße Verfahren zur Ermittlung einer bewegten Masse m eines Aufzugtürsystems wird im Folgenden an einem Ausführungsbeispiel erläutert. Bei dem Verfahren erfolgt eine permanente Aufsummierung der elektrischen Leistung $P_{el}$, die dem Motor zu- und abgeführt wird. Dadurch kann zu beliebigen Zeitpunkten eine Energiebilanz gezogen werden. Durch eine geschickte Wahl der Zeitpunkte kann die Türmasse mit automatischer Kompensation von Reib- und Schließkräften bestimmt werden. Weiterhin lassen sich durch Aneinanderreihen von Öffnungs- und Schließfahrt auch die Reibkraft und eine mögliche Schließkraft (z.B. durch Feder oder Gegengewicht) explizit berechnen.

Zur Masseermittlung wird das Türsystem als Energiespeicher betrachtet, da nur die Masse m geeignet ist, Energie während einer Fahrt zu speichern und wieder abzugeben. Alle anderen Kräfte entziehen dem Türsystem nur Energie und geben diese während einer Öffnungs- oder Schließfahrt nicht wieder zurück. Da die Tür am Anfang und am Ende den gleichen Energiezustand hat (die Tür steht), entspricht die resultierende Energie den Verlusten durch die Reibung bzw. der Überwindung der Federkraft oder dem Gegengewicht. Die während der Fahrt im Zeitpunkt der höchsten Geschwindigkeit v aufsummierte gemessene Energie, d.h. das zeitliche Integral der elektrisch bis dahin abgegebenen Leistung $P_{el}$, entspricht die vorhandenen Energiesumme aus kinetischer Energie der Masse m und der bis dahin benötigten Reibungs- und Gegengewichtsenergie. Da die Bewegungs- und Reibungsenergie am Ende der Fahrt bekannt ist, kann diese anteilig bei dem Zwischenwert mit maximaler Geschwindigkeit berücksichtigt werden und es ergibt sich hieraus unmittelbar die kinetische Energie, die im System steckt. Dieser Energiewert entspricht der bekannten Formel

$$E = \tfrac{1}{2} \cdot m \cdot v^2 \text{ ,}$$

so dass sich die Türmasse m gemäß

$$m = \frac{2E}{v^2}$$

sofort berechnen lässt.

Um die elektrische Energie zu bestimmen, wird im Unterschied zum oben beschriebenen Verfahren gemäß dem Stand der Technik anstelle der Spannungszeitfläche direkt die Gegen-EMK $U_{EMK}$ verwendet, die sich sehr einfach über einen Proportionalitätsfaktor $k_v$ aus der aktuellen und gut messbaren Geschwindigkeit $v_{Mot}$ ergibt. Die elektrische Leistung $P_{el}$, die in mechanische Leistung umgewandelt wird, ergibt sich aus folgender Beziehung:

$$P_{el} = U_{EMK} \cdot I_{Mot}$$

(Motorstrom: $I_{Mot}$).

Wegen des Zusammenhangs

$$U_{EMK} = kv \cdot v_{Mot}$$

Der Faktor $k_v$ ergibt sich aus dem Verhältnis der Nennspannung $U_{nom}$ zur Geschwindigkeit $v_{Mot\_LL}$ im Leerlauf, d.h. ohne Belastung gemäß der Formel

$$k_v = \frac{U_{nom}}{v_{Mot\_LL}}$$

lässt sich nun die elektrische Leistung auch über die Geschwindigkeit bestimmen:

$$P_{el} = k_v \cdot v_{Mot} \cdot I_{Mot}$$

Das Produkt aus Strom $I_{Mot}$ und Geschwindigkeit $v_{Mot}$ multipliziert mit einer Motorkonstanten $k_v$ ergibt direkt die elektrische Leistung $P_{el}$, die in mechanische Leistung umgewandelt wird. Hierbei entfällt die aufwendige und fehlerbehaftete Kompensation von Innenwiderstand, Totzeit und schwankender Zwischenkreisspannung.

Die Ermittlung der Türmasse m wird im Folgenden Beispiel näher erläutert.

Das Türsystem wird von einem Motor über einen Antriebsriemen für den Öffnungs- oder Schließvorgang in Bewegung gesetzt. Dabei werden der Motorstrom $i_q$ und die Rotorposition $\gamma_{mot}$ zyklisch gemessen (z.B. im Interrupt). Denkbar ist auch eine azyklische Erfassung, dann muss aber das Zeitintervall ebenfalls ermittelt werden.

Aus der Rotorposition $\gamma_{mot}$ lässt sich mittels Differenzierung die Rotorgeschwindigkeit $\omega_{mot}$ ermitteln.

Für die Energieberechnung pro Zyklus lassen sich zwei Wege beschreiten:

a) Über Strom $i_q$, Drehzahl $\omega_{mot}$ und Zykluszeit $\Delta t$

$$\Delta E = k_E \cdot i_q \cdot \omega_{mot} \cdot \Delta t$$

(Hinweis: $\Delta t$ bezeichnet die Zykluszeit)

b) Über Strom $i_q$ und Rotorposition $\gamma_{mot}$:

$$\Delta E = k_t \cdot i_q \cdot \Delta \gamma_{mot}$$

(Hinweis: $\Delta \gamma_{mot}$ bezeichnet die Änderung des Rotorwinkels im letzten Zyklus $\Delta t$).

Die vorstehenden Gleichungen lassen sich sehr einfach ineinander umformen und bieten eine vergleichbare Genauigkeit:

Mit $\omega = \dfrac{\Delta \gamma_{mot}}{\Delta t}$ und $k_E = k_t = \dfrac{U}{\omega} = \dfrac{M}{i_q}$ kann man die zweite Gleichung unmittelbar aus der ersten herleiten.

Mit $U$ wird hier die Gegen-EMK und mit $M$ das Drehmoment bezeichnet. $k_E$ und $k_t$ sind hierbei Konstanten.

Zum besseren Verständnis der Energieverhältnisse kann man das Gesamtsystem als Zusammenschaltung von zwei verlustlosen Energiespeichern (Zahnriemen und Türmasse) ansehen, wobei sämtliche Energieverluste der Reibung zugeschlagen werden.

Der Ablauf der Masseermittlung erfolgt in folgenden Schritten:

a) Messung des Motorstroms $i_q$
Bei DC-Antrieben ist dies der Motorstrom selbst, bei EC-Antrieben ist dies der drehmomentbildende Strom $i_q$.
b) Messung der Rotorposition $\gamma_{mot}$
Je nach verwendetem Sensor können unterschiedliche Messwerte erhalten werden, wichtig ist die Umrechnung auf den Winkel in Radiant ($2\pi$) und die Bildung der Differenz zur letzten Position.
c) Berechnung des Produkts $i_q . \Delta \gamma_{mot}$ und Aufsummierung
Das Produkt aus Motorstrom iq und Änderung der Rotorposition $\Delta \gamma_{mot}$ ist proportional zur Energie in dem Zyklus. Dieser Wert wird aufsummiert und später mit der Konstanten $k_t$ multipliziert.
d) Aufsummierung des zurückgelegten Winkels $\gamma_{mot,sum}$
Parallel zu dieser Aufsummierung wird auch die zurückgelegte Strecke des Rotors aufsummiert (Summierung des Winkels) .
e) Speicherung von Zwischenwerten
Für die spätere Berechnung der Masse m und der Reibung werden die Zwischenergebnisse, die zum Zeitpunkt der maximalen Türenergie geherrscht haben, sowie die Gesamtwerte für Öffnungs- und Schließvorgang gespeichert. Gespeichert werden jeweils:

- die jeweilige Drehzahl $\omega_{mot}$,

- die Produktsumme $\dfrac{E_{mot,sum}}{k_t} = \Sigma\left(i_q \cdot \Delta \gamma_{mot}\right)$ sowie

- die Rotorwinkelsumme $\gamma_{mot,sum} = \Sigma \Delta \gamma_{mot}$.

f) Speicherung der Endwerte

Neben den Zwischenergebnissen in Auf- und Zu-Richtung werden auch die Produkt- und Winkelsummen für die volle Öffnungs- und Schließfahrt abgespeichert. Definitionsgemäß ist die Drehzahl in den Endpunkten Null.

g) Berechnung der Reibkraft

Es wird die mittlere Reibkraft für die Öffnungs- und die Schließfahrt berechnet. Die verlustlosen Energiespeicher des Gesamtsystems besitzen in den Endpositionen wieder gleiche Werte. Zwischenzeitliche Aufladungen wurden wieder ausgeglichen. Damit entspricht die im System verbliebene Energie genau den Reibungsverlusten.

- Gesamtenergie aus der Produktsumme:

$$E_{frict,ges} = k_t \cdot \sum_{\gamma=0}^{\gamma=Endpos} \left( i_q \cdot \Delta\gamma_{mot} \right)$$

- Das Reibmoment ergibt sich aus der Gesamtenergie und dem zurückgelegten Rotorwinkel:

$$M_{frict} = \frac{E_{frict}}{\gamma_{mot,sum}}$$

h) Berechnung der Türmasse m

Aus der zum Zeitpunkt der maximalen Türgeschwindigkeit abgespeicherten Produktsumme lässt sich die bis dahin zugeführte Energie berechnen:

$$E_{sum,zw} = k_t \cdot \sum_{\gamma=0}^{\gamma=Zwischenwert} \left( i_q \cdot \Delta\gamma_{mot} \right).$$

Ein Teil dieser Energie wurde zur Überwindung der Reibung benötigt. Dieser Energieanteil $E_{frict,ges}$ wird über das Reibmoment und das Verhältnis von Teilstrecke $\gamma_{mot,zw}$ zu Gesamtstrecke $\gamma_{mot,sum}$ berechnet:

$$E_{frict,zw} = M_{frict} \cdot \gamma_{mot,zw} = \frac{\gamma_{mot,zw}}{\gamma_{mot,sum}} \cdot E_{frict,ges}.$$

Die kinetische Energie $E_{door,kin}$ der Tür ergibt sich als Differenz von zugeführter Energie $E_{sum,zw}$ und durch Reibung verlorener Energie $E_{frict,zw}$:

$$E_{door,kin} = E_{sum,zw} - E_{frict,zw} = E_{sum,zw} - \frac{\gamma_{mot,zw}}{\gamma_{mot,sum}} \cdot E_{frict,ges}$$

Türmasse m:

$$m = \frac{2 \cdot E_{door,kin}}{\left( \omega_{mot} \cdot r \right)^2}$$

(Radius r der Antriebswelle für den Zahnriemen).

Gemäß diesem Verfahren wird nach der letzten Gleichung die Masse m des Türsystems jeweils aufgrund einer bestimmungsgemäßen Öffnungs- und/oder Schließfahrt ermittelt. Es genügt demnach eine bestimmungsgemäße Einzelfahrt, Öffnungs- oder Schließfahrt, aber es kann die zu ermittelnde Masse m des Türsystems auch als Mittelwert der Ergebnisse aus beiden Fahrten bestimmt werden. Als bestimmungsgemäße Öffnungs- und Schließfahrten werden solche Öffnungs- und Schließfahrten bezeichnet, die sich von Öffnungs- und Schließfahrten bei bestimmungsgemäßer, d.h. normaler Anwendung nicht unterscheiden.

• Merklich unterschiedliche Reibmomente bei Öffnungs- und Schließfahrt lassen auf eine zusätzliche Systemkraft (z. B. Gegengewicht oder Feder) schließen und/oder der Wirkungsgrad könnte richtungsabhängig sein.

- Der im System postulierte Energiespeicher "Zahnriemen" muss bei allen Messpunkten (am Anfang, beim Zwischenwert und in der Endposition) annähernd gleiche Energie enthalten (bzw. die Unterschiede müssen klein gegenüber der Gesamtenergie sein), da sonst die Genauigkeit leidet.
- Das Verfahren lässt sich mit nahezu beliebigen Fahrkurven anwenden. Es muss nur darauf geachtet werden, dass die kinetische Energie der Tür sich ausreichend deutlich gegenüber der Reibenergie darstellen lässt, da sonst die Genauigkeit leidet.
- Das Verfahren gibt automatisch die Reibung mit heraus, was für Service-Zwecke interessant ist.
- Das Verfahren ist relativ robust und liefert eine gute Wiederholgenauigkeit, da es integrierend arbeitet und überlagertes Rauschen herausmittelt.
- Anstelle der Auswertung der Istgeschwindigkeit für den Zwischenwert könnte auch die Sollgeschwindigkeit oder eine Kombination aus beiden verwendet werden.

**Patentansprüche**

1. Verfahren zur Ermittlung einer bewegten Masse m eines Aufzug-Türsystems, das von einem Motor angetrieben wird, in folgenden Schritten:

   a) Messung der elektrischen Leistung $P_{el}$ des Motors, die in mechanische Leistung umgewandelt wird,
   b) die elektrische Leistung $P_{el}$ wird bei einer bestimmungsgemäßen Öffnungs- und/oder einer Schließfahrt des Türsystems jeweils von Beginn des Antriebs der Masse m durch den Motor aus einer Ausgangsruhelage bis Erreichen einer Endruhelage nach Beendigung des Antriebs zur Ermittlung von Energieverlusten, z.B. durch Reib- und/oder Schließkräfte, aufsummiert,
   c) Messung der maximalen Geschwindigkeit v der Masse m des Türsystems während der bestimmungsgemäßen Öffnungs- und/oder Schließfahrt des Türsystems,
   d) die von der Ausgangsruhelage der Masse m des Türsystems bis zum Zeitpunkt des Erreichens ihrer maximalen Geschwindigkeit v vom Motor bereitgestellte elektrische Leistung wird aufsummiert und der so erhaltene Energiewert wird um die bis zu diesem Zeitpunkt aufgetretenen Energieverluste reduziert, um aus der so erhaltenen kinetischen Energie E die Masse m des Türsystems gemäß der folgenden Gleichung zu ermitteln:

$$m = \frac{2E}{v^2} \quad .$$

**Claims**

1. Method for determining a moving mass m of an elevator door system driven by a motor, comprising the following steps:

   a) Measurement of the motor's electrical power $P_{el}$ which is converted into mechanical power,
   b) to determine energy losses e.g. due to friction and/or closing forces, the electrical power $P_{el}$ is summed for an intended opening and/or closing movement of the door system from the start of driving of the mass m by the motor from an initial rest position until a final rest position is reached on termination of driving,
   c) measurement of the maximum speed v of the mass of the door system during the intended opening and/or closing movement of the door system,
   d) the electrical power provided by the motor from the initial rest position of the mass m of the door system to the point in time when its maximum speed v is attained is summed and the energy value thus obtained is reduced by the energy losses that have occurred up to this point in time in order to determine the mass m of the door system from the kinetic energy E thus obtained according to the following equation:

$$m = \frac{2E}{v^2} \quad .$$

**Revendications**

1. Procédé de détermination d'une masse m en mouvement d'un système de porte d'ascenseur, entraîné par un moteur, comprenant les stades suivants :

a) mesure de la puissance $P_{el}$ électrique du moteur, qui est transformée en puissance mécanique,

b) la puissance $P_{el}$ électrique est, pour un trajet d'ouverture et/ou un trajet de fermeture, conforme aux prescriptions, du système de porte, sommée respectivement du début de l'entraînement de la masse m par le moteur, d'une position initiale de repos, jusqu'à ce que soit atteinte une position finale de repos, après que l'entraînement soit terminé, pour la détermination de perte d'énergie, par exemple par des forces de frottement et/ou des forces de fermeture,

c) mesure de la vitesse v maximum de la masse m du système de porte pendant le trajet d'ouverture et/ou le trajet de fermeture, conforme aux prescriptions, du système de porte,

d) la puissance électrique mise à disposition par le moteur de la position initiale de repos de la masse m du système de porte jusqu'à l'instant où est atteint sa vitesse v maximum, est sommée et la valeur de l'énergie ainsi obtenue est réduite des pertes d'énergie apparues jusqu'à cet instant pour déterminer, à partir de l'énergie E cinétique ainsi obtenue, la masse m du système de porte, selon l'équation suivante :

$$m = \frac{2E}{v^2} \quad .$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1529251 B1
- EP 0548505 B1

- WO 2007028850 A1